# EUROPEAN PATENT SPECIFICATION

(11) **EP 3 882 876 B1**
(45) Date of publication and mention of the grant of the patent: **05.11.2025**
(21) Application number: 21150144.0
(22) Date of filing: 05.01.2021
(51) Int. Cl.: G07F 17/00, B65B 5/10

(54) **AUTOMATIC MEDICINE PACKING MACHINE**
AUTOMATISCHE MEDIZINVERPACKUNGSMASCHINE
MACHINE D'EMBALLAGE AUTOMATIQUE DE MÉDICAMENTS

(30) Priority: 18.03.2020 KR 20200033498
(43) Date of publication of application: 22.09.2021
(73) Proprietor: JVM Co., Ltd., Daegu 42709 (KR)
(72) Inventor: Kim, Jun-ho, 42093 Daegu (KR)
(74) Representative: RGTH

(56) References cited:
- EP-A1- 1 621 296
- EP-A1- 2 853 252
- EP-A2- 1 923 036
- WO-A1-2018/234612
- US-A1- 2007 079 735
- US-A1- 2017 173 796
- US-B1- 6 170 699

## Description

The present disclosure relates to an automatic medicine packing machine for automatically discharging and packing medicines on a dose basis according to prescription information, and more particularly, to an automatic medicine packing machine configured to automatically replace a medicine cassette with a new one when the medicine cassette is empty or when the medicines accommodated in the medicine cassette are not sufficient, thereby packing the medicines in a faster manner and in larger quantities.

The present disclosure has been derived from a study conducted as Next-generation leading technology development business of Daegu Techno Park (Project Number: 7212101-2019-0002, Project Name: Development of robotic tablet packing system for improving pharmacy efficiency by 30% and automatically refilling medicines so as to meet Mail Order Pharmacy).

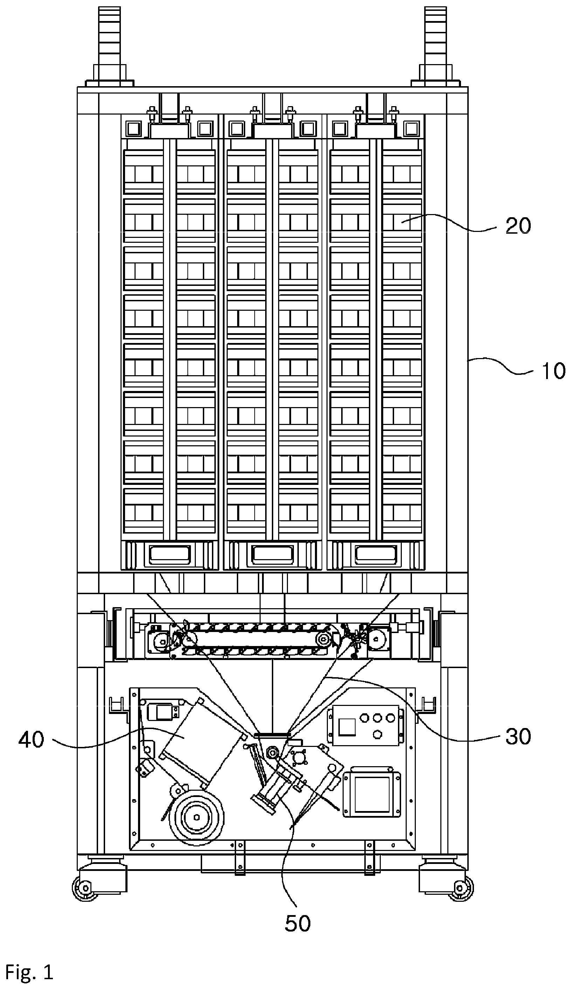

Referring to FIG. 1, there is exemplarily shown an automatic medicine packing machine 10 for automatically discharging and packing medicines on a dose basis according to prescription information. As shown in FIG. 1, the automatic medicine packing machine 10 is typically configured as including a main body 10, a plurality of medicine cassettes 20 disposed on the upper portion of the main body 10 and configured to accommodate a variety of sizes and forms of medicines (for example, medicines such as tablets, capsules or the like), a hopper 30 provided at the lower portion of the main body 10 and configured to collect medicines discharged and dropped from the medicine cassettes 20, a printing device 40 configured to print a variety of information on the surface of a medicine bag that packs the medicines, a packing device 50 configured to pack the medicines collected by the hopper 30 in the medicine bag, and the like.

As shown in FIG. 1, the automatic medicine packing machine 10 is configured to place the medicine cassettes 20 in a limited space provided in the upper portion of the main body 10 and receive the medicines through the medicine cassettes 20. As a result, there is a limit on the number of medicines that can be supplied to the automatic medicine packing machine 10 due to the constraint of a space in which the medicine cassettes 20 are accommodated, which may degrade the efficiency of the medicine packing operation.

In addition, in the conventional automatic medicine packing machine 10, when all of the medicines stored in the medicine cassette 20 are used, a pharmacist or manager stops the operation of the automatic medicine packing machine 10, takes out the medicine cassette 20 from the automatic medicine packing machine 10, and directly fills the medicine cassette 20 with the medicines. This makes the filling operation cumbersome, and the pharmacist or manager has a difficulty of taking the inventory of medicines to be filled into the medicine cassette one by one.

In addition, since the pharmacist or manager needs to mount the refilled cassette 20 correctly in its original position, the medicine refilling operation is very cumbersome. When the medicine cassette 20 is mounted in a position different from the original position, inappropriate medicines may be collected and packed, causing a medical accident.

EP1923036 A2 discloses a medicine management system, in which using a robot unit, the replenishment of medicines is implemented by moving an empty cassette of an automatic medicine packing apparatus and then mounting the automatic medicine packing apparatus with a new cassette which is kept in a medicine storage unit.

WO2018234612 A1 discloses an apparatus for handling and delivering medication pouches in which an industrial robot collecting the pouches is configured to move along guide tracks.

US6170699 B1 discloses a tablet supplying apparatus which may be disposed between a tablet dropping unit and a packaging unit, the apparatus comprising tablet receiving trays which are moved by a conveyor belt.

The present disclosure is proposed to solve the afore-mentioned problems of the conventional automatic medicine packing machine, and is to provide an automatic medicine packing machine configured to, when a medicine cassette mounted in the automatic medicine packing machine is empty, automatically replace the empty medicine cassette with a new one and perform packing of medicines in a faster manner and in larger quantities.

Representative configurations of the present disclosure for achieving the abovementioned object are as follows.

According to one embodiment of the present disclosure, there is provided an automatic medicine packing machine for automatically packing medicines on a dose basis according to prescription information. The automatic medicine packing machine according to one embodiment of the present disclosure may comprise: a medicine cassette mounting part in which a plurality of medicine cassettes for supplying the medicines are mounted; a medicine collecting part configured to collect the medicines supplied according to the prescription information; a medicine packing part configured to pack the medicines collected by the medicine collecting part on the dose basis; a medicine cassette storage part in which a plurality of medicine cassettes are placed and stored; and a medicine cassette replacement system configured to grip the medicine cassette and replace the medicine cassette between the medicine cassette mounting part and the medicine cassette storage part.

According to one embodiment of the present disclosure, the medicine cassette replacement system may include a transfer robot equipped with a gripper for gripping the medicine cassette 110 at an end portion of the transfer robot.

According to one embodiment of the present disclosure, the transfer robot may be formed as a multi-joint robot.

According to one embodiment of the present disclosure, the medicine cassette replacement system may include a temporary stage provided at one side of the transfer robot and on which the medicine cassette is placed.

According to one embodiment of the present disclosure, the medicine cassette may be arranged in a same upward-downward orientation on the medicine cassette mounting part, the medicine cassette storage part and the temporary stage.

According to one embodiment of the present disclosure, the transfer robot may be configured to transfer the medicine cassette while keeping the upward-downward orientation of the medicine cassette constant.

According to one embodiment of the present disclosure, the medicine cassette may have a first grip groove formed to extend along a first direction and a second grip groove formed to extend along a second direction different from the first direction.

According to one embodiment of the present disclosure, the first grip groove may be formed to extend along a vertical direction of the medicine cassette, and the second grip groove may be formed to extend along a lateral direction of the medicine cassette.

According to one embodiment of the present disclosure, the medicine cassette transfer system may be configured such that the transfer robot is movable relative to the medicine cassette mounting part and the medicine cassette storage part along a guide rail.

According to one embodiment of the present disclosure, the medicine cassette may be provided with an identification information storage part that stores information on at least one of a type and quantity of the medicines stored in the medicine cassette, portion at which the medicine cassette is mounted in the medicine cassette mounting part, the medicine cassette storage part and the temporary stage may be provided with an identification information storage part that stores position information of the medicine cassette, and the medicine cassette, the medicine cassette mounting part, the medicine cassette storage part and the temporary stage may include an interface unit configured to transmit and receive the identification information stored in the identification information storage part.

According to one embodiment of the present disclosure, the medicine cassette storage part may be formed as storage shelves of a multi-layered structure in which a plurality of storage regions are formed, and a plurality of medicine cassettes may be able to be arranged in the plurality of storage regions in plural rows and plural columns.

According to one embodiment of the present disclosure, all or a portion of the medicine cassette storage part may be formed to have a configuration in which a plurality of storage shelves are arranged in the plural rows, and the plurality of storage shelves may be arranged in one direction in each of the plural rows.

According to one embodiment of the present disclosure, at least storage shelves other than rearmost storage shelve among the plurality of storage shelves arranged in the plural rows may be configured to move along a movement rail, and an empty space may be formed between adjacent storage shelves among the storage shelves other than the rearmost storage shelves.

According to one embodiment of the present disclosure, the medicine collecting part and the medicine packing part may include a plurality of medicine collecting parts and a plurality of medicine packing parts, respectively.

According to another embodiment of the present disclosure, there is provided a factory-type automatic medicine packing system including a plurality of the aforementioned automatic medicine packing machine. The automatic medicine packing system according to one embodiment of the present disclosure may comprise: a rail system provided at one side of the automatic medicine packing machine; a refill cassette stage mounted on the rail system and configured to be able to move along the rail system; a first refill cassette transfer device configured to transfer a medicine cassette between the automatic medicine packing machine and the refill cassette stage; a refill station configured to fill the medicine cassette with medicines; and a second refill cassette transfer device configured to transfer the medicine cassette between the refill cassette stage and the refill station.

In addition to the above, the automatic medicine packing machine according to the present disclosure may further include other additional components within the scope not impairing the technical idea of the present disclosure.

The automatic medicine packing machine according to one embodiment of the present disclosure is configured to automatically replace an empty cassette mounted on the medicine cassette mounting part with a new one stored in the medicine cassette storage part using the transfer robot. Thus, it is possible to pack a larger number of medicines in a faster and easier manner.

Further, the automatic medicine packing machine according to one embodiment of the present disclosure is configured to include a temporary stage provided near the transfer robot and on which a medicine cassette can be placed. Thus, the automatic medicine packing machine can approach the medicine cassette to be replaced at a state that a new medicine cassette is placed on the temporary stage. Accordingly, a medicine cassette replacement operation can be easily and faster performed even if a single transfer robot is provided in the automatic medicine packing machine.

In addition, the automatic medicine packing machine according to one embodiment of the present disclosure is configured to be able to grip the medicine cassette in various directions with a plurality of grip grooves formed in the medicine cassette. Thus, it is possible to perform the medicine cassette replacement operation with a single transfer robot while keeping an upward-downward orientation of the medicine cassette constant. This makes it possible to automatically perform the medicine cassette replacement operation without damaging medicines.
FIG. 1 exemplarily shows a schematic configuration of a conventional automatic medicine packing machine.
FIG. 2 exemplarily shows an overall configuration of an automatic medicine packing machine according to one embodiment of the present disclosure.
FIG. 3 exemplarily shows the automatic medicine packing machine of FIG. 2 as viewed from the front side.
FIG. 4 exemplarily shows the automatic medicine packing machine of FIG. 2 as viewed from one lateral side.
FIG. 5 exemplarily shows cross-sectional configurations of a medicine cassette mounting part, a medicine collecting part and a medicine packing part included in the automatic medicine packing machine according to one embodiment of the present disclosure.
FIG. 6 exemplarily shows a lower structure of the medicine cassette mounting part according to one embodiment of the present disclosure.

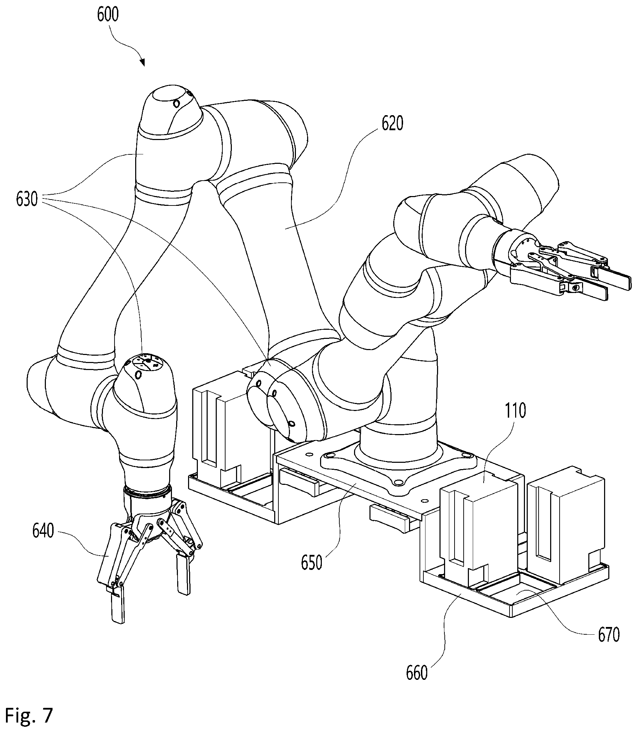

FIG. 7 exemplarily shows a medicine cassette replacement system, which can be used in the automatic medicine packing machine according to one embodiment of the present disclosure.
FIG. 8 exemplarily shows a configuration of a medicine cassette, which can be used in the automatic medicine packing machine according to one embodiment of the present disclosure.
FIGS. 9A and 9B exemplarily show a state in which the medicine cassette is gripped by the medicine cassette replacement system in the automatic medicine packing machine according to one embodiment of the present disclosure. [FIG. 9A shows a state in which the medicine cassette mounted on the medicine cassette mounting part is gripped, and FIG. 9B shows a state in which the medicine cassette arranged in a medicine cassette storage part is gripped.]
FIG. 10 conceptually shows a configuration in which a factory-type medicine packing system is implemented using the automatic medicine packing machine according to one embodiment of the present disclosure.

Hereinafter, preferred embodiments of the present disclosure will be described in detail with reference to the appended drawings to such an extent that the present disclosure can be readily implemented by one of ordinary skill in the art.

Detailed descriptions of parts irrelevant to the present disclosure will be omitted for the purpose of more clearly describing the present disclosure. Throughout the specification, the same components will be described using same reference numerals. In addition, the shapes and sizes of the respective components shown in the drawings are arbitrarily shown for the sake of convenience in description, and hence the present disclosure is not necessarily limited to the shapes and sizes shown. That is, it should be understood that specific shapes, configurations, and characteristics described in the specification may be modified in various embodiments without departing from the spirit and scope of the prevent disclosure, and positions or arrangements of individual components may be modified without departing from the spirit and scope of the prevent disclosure. Therefore, detailed descriptions to be described below should be construed as non-limitative senses, and the scope of the prevent disclosure should be understood to include appended claims and their equivalents.

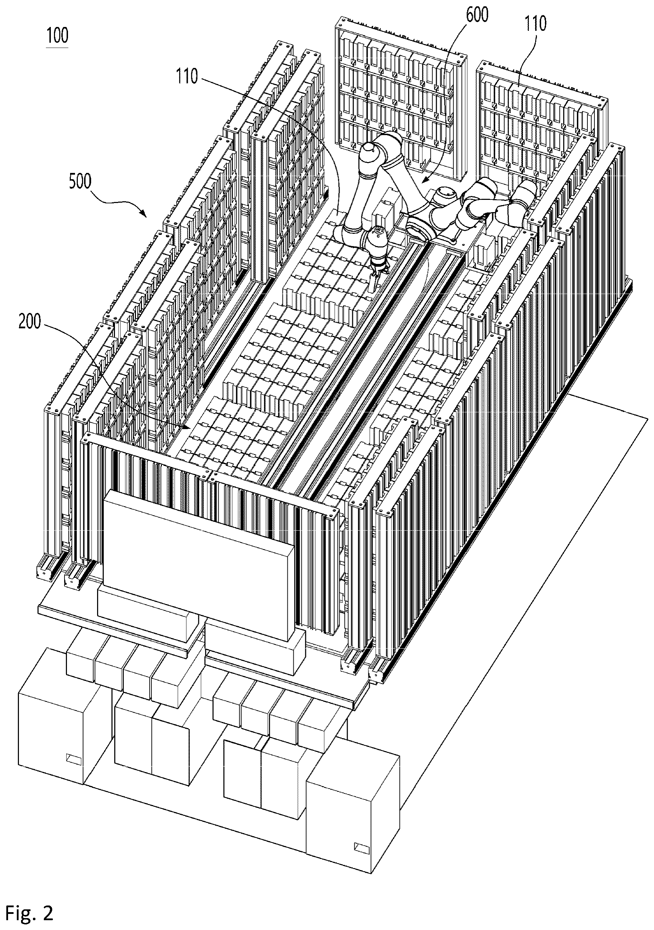

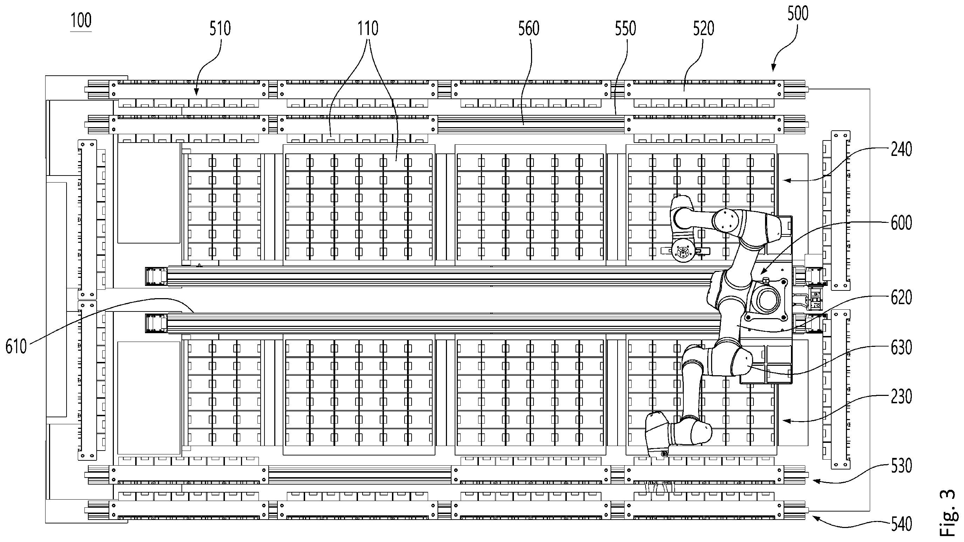

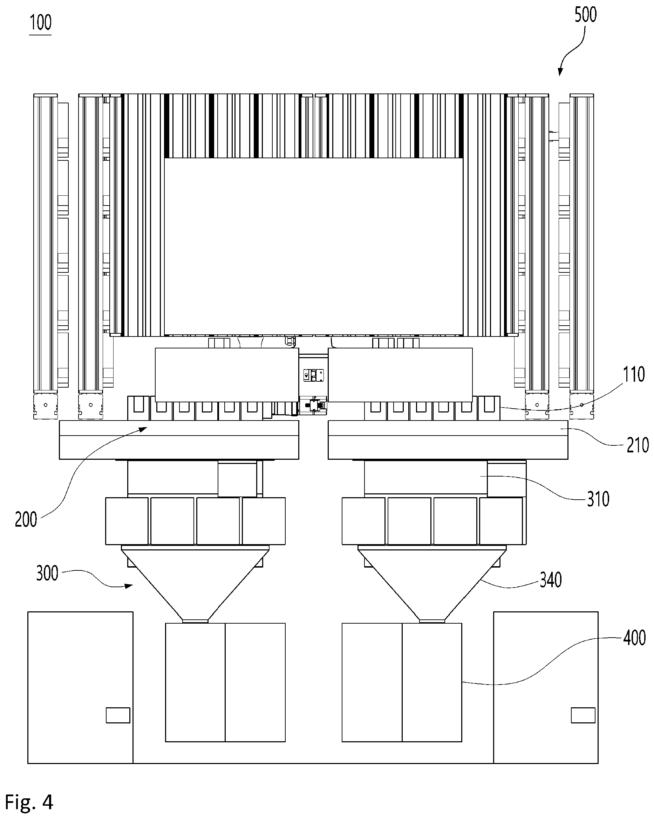

First, referring to FIGS. 2 to 4, an overall configuration of an automatic medicine packing machine 100 according to one embodiment of the present disclosure is exemplarily shown (in FIGS. 2 to 4, an outer housing is omitted to more clearly show an internal configuration of the automatic medicine packing machine 100 according to one embodiment of the present disclosure).

The automatic medicine packing machine 100 according to one embodiment of the present disclosure may be configured to collect and pack medicines on a dose basis according to prescription information, like in a conventional automatic medicine packing machine. Further, the automatic medicine packing machine 100 is configured such that when all medicines accommodated in a medicine cassette have been used, the medicine cassette can be automatically replaced with a new medicine cassette to more rapidly perform the collection and packing of medicines in large quantities, as described below.

According to one embodiment of the present disclosure, the automatic medicine packing machine 100 may be configured to comprise a medicine cassette mounting part 200 on which a medicine cassettes 110 for supplying medicines are mounted; a medicine collecting part 300 configured to collect medicines according to prescription information and deliver the collected medicines to a medicine packing part; a medicine packing part 400 for packing and discharging the medicines collected by the medicine collecting part 300 on a dose basis; a medicine cassette storage part 500 in which a plurality of medicine cassettes are placed and stored; a medicine cassette replacement system 600 configured to replace the medicine cassette 110 with a new medicine cassette between the medicine cassette mounting part 200 and the medicine cassette storage part 500; and the like.

According to one embodiment of the present disclosure, the medicine cassette mounting part 200 may be configured such that the medicine cassette mounting part 200 is mounted on one side thereof, and may perform a function of delivering the medicines accommodated in the medicine cassette 110 to the medicine collecting part 300 according to the prescription information.

According to one embodiment of the present disclosure, the medicine cassette mounting part 200 may be formed in a plate structure in which the medicine cassette 110 is mounted on a top surface of the medicine cassette mounting part 200. A plurality of mounting holders 210 may be provided on the top surface of the plate structure that forms the medicine cassette mounting part 200 such that the medicine cassette 110 may be mounted on the top surface.

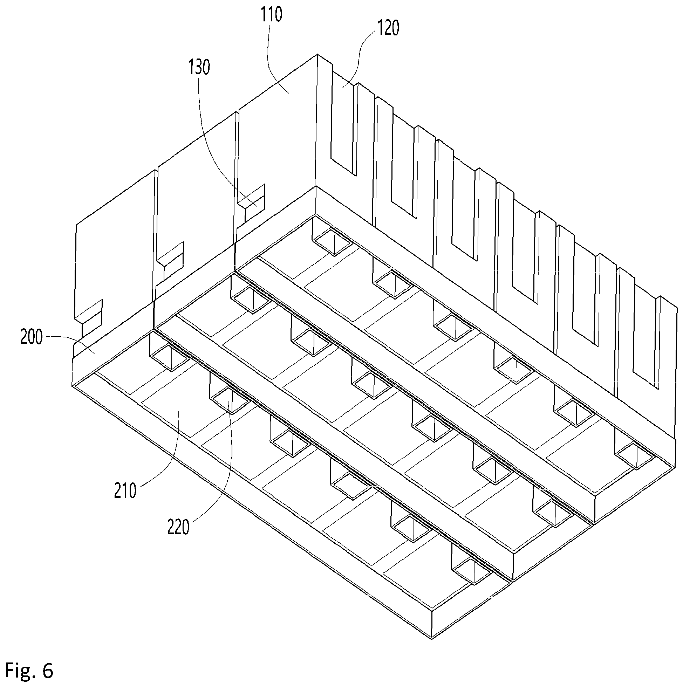

For example, the medicine cassette mounting part 200 may be configured such that the mounting holders 210 for mounting the medicine cassette 110 are arranged on the top surface of the plate structure in a matrix pattern. Further, the medicine cassette mounting part 200 may be configured such that a through-hole 220 is formed in a bottom surface of each mounting holder 210 and the medicines are discharged downward from the medicine cassette 110 disposed in each mounting holder 210 via the through-hole 220 (*see* FIG. 6). In particular, the through-hole 220 may be aligned with a through-hole (not shown) formed in a lower portion of the medicine cassette 110 mounted on the medicine cassette mounting part 200 so as to discharge the medicines accommodated in the medicine cassette 110 in a downward direction according to an operation of a shutter member, similar with a conventional medicine cassette.

According to one embodiment of the present disclosure, the medicine cassette mounting part 200 may be as a single plate structure, or may have a configuration in which a plurality of plate structures are combined.

For example, in the embodiment shown in the drawings, medicine cassette mounting parts (a first row of medicine cassette mounting part 230 and a second row of medicine cassette mounting part 240) may be arranged in two rows at both sides of a guide rail 610 of the medicine cassette replacement system 600 (to be described later). The medicine cassette mounting part of each row may be configured to have a plurality of plate structures (three plate structures are provided in each raw of the embodiment shown in FIGS. 2 to 4).

According to one embodiment of the present disclosure, the medicine collecting part 300 may be disposed below the medicine cassette mounting part 200, and may include a medicine collecting tray 310 of receiving the medicines discharged from the medicine cassette 110.

According to one embodiment of the present disclosure, the medicine collecting tray 310 may be configured to receive and transfer the medicines discharged from the medicine cassette 110 mounted on the medicine cassette mounting part 200 while moving relative to the medicine cassette mounting part 200 below the medicine cassette mounting part 200 through a conveyor belt 320 rotated by an electric motor (not shown).

According to one embodiment of the present disclosure, the medicine collecting tray 310 may be configured to include a plurality of medicine reception pockets 330 arranged along a longitudinal direction of the conveyor belt 320 and to receive the medicines dropped from the medicine cassette 110 in the medicine reception pockets 330. To do this, each of the medicine reception pocket 330 may have one opened surface (for example, opened upper surface).

According to one embodiment of the present disclosure, in the case in which a plurality of medicine cassettes 110 are arranged on the medicine cassette mounting part 200 in a widthwise direction of the conveyor belt 320 as in the embodiment shown in the drawings, the medicine reception pockets 330 may be formed in a structure having a long length in the widthwise direction of the conveyor belt 320 to receive all medicines dropped from the plurality of medicine cassettes 110.

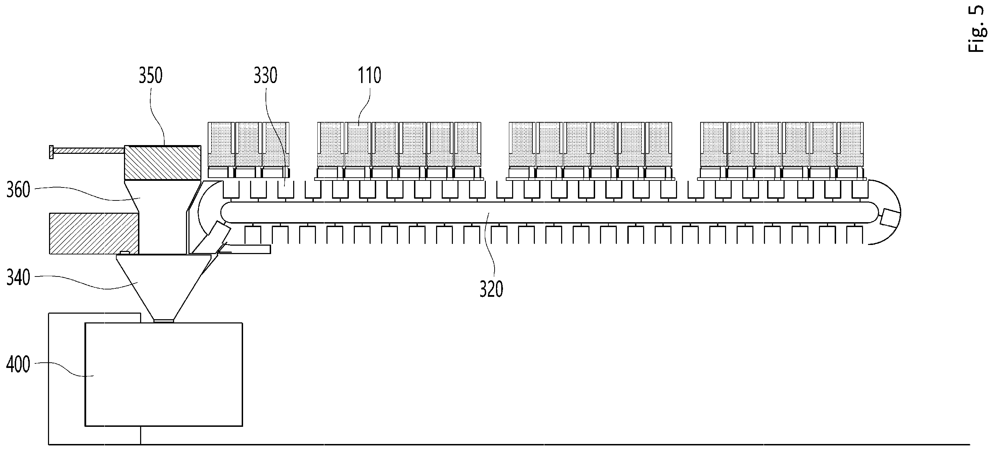

According to one embodiment of the present disclosure, a medicine collecting hopper 340 may be disposed on one side of the medicine collecting tray 310. As shown in FIG. 5, the medicine collecting hopper 340 may be disposed below the medicine collecting tray 310 at one end portion of the medicine collecting tray 310 so as to collect the medicines collected and moved by the medicine reception pocket 330 of the medicine collecting tray 310.

According to one embodiment of the present disclosure, the medicine collecting part 300 may be configured to further include a powdery-medicine supply part 350 for supplying medicines (for example, powdery medicine) other than the form of a tablet, capsule or the like, and the like. For example, the powdery-medicine supply part 350 may be formed in the form of a tray having partitions, similar with the conventional automatic medicine packing machine, and may be configured to supply the powdery medicine to the medicine collecting hopper 340 through a powdery-medicine transfer part 360.

According to one embodiment of the present disclosure, the medicine packing part 400 may perform a function of receiving the medicines from the medicine collecting hopper 340 to automatically pack and discharge the medicines on a dose basis according to the prescription information. According to one embodiment of the present disclosure, the medicine packing part 400 may be configured identically or similarly to a medicine packing part of the conventional automatic medicine packing machine. The medicine packing part 400 may be provided with a printing part configured to print information about a patient and/or medicines on the surface of a medicine packet.

According to one embodiment of the present disclosure, a plurality of medicine collecting parts 300 and/or a plurality of medicine packing parts 400 may be provided in the automatic medicine packing machine 100. For example, in the embodiment shown in the drawings, the medicine cassette mounting parts 200 are configured to be arranged at both sides of the guide rail 610 of the medicine cassette replacement system 600. The medicine collecting parts 300 and the medicine packing parts 400 are configured to be arranged according to each of the medicine cassette mounting parts 200. Thus, it is possible to more quickly collect and pack the medicines with the plurality of medicine collecting parts 300 and the plurality of medicine packing parts 400.

Further, according to one embodiment of the present disclosure, an inspection system 450 may be further provided on one side of the medicine collecting part 300 and/or the medicine packing part 400 to check whether or not medicines are accurately collected/packed on a dose basis according to the prescription information by capturing an image of the collected or packed medicines.

According to one embodiment of the present disclosure, the inspection system 450 may be configured with a vision system or the like configured to capture an image of the collected or packed medicines using a camera, and may be configured identically or similarly to a medicine inspection system used in the conventional automatic medicine packing machine.

According to one embodiment of the present disclosure, the medicine cassette storage part 500 in which a plurality of medicine cassettes 110 are arranged and stored, may be provided at one side of the medicine cassette mounting part 200 on which a plurality of medicine cassettes 110 are mounted.

According to one embodiment of the present disclosure, the medicine cassette storage part 500 may be provided above the medicine cassette mounting part 200, and may be formed in a shelf-like structure having a plurality of storage regions 510 in which the medicine cassettes 110 are disposed and stored.

For example, according to one embodiment of the present disclosure, the medicine cassette storage part 500 may be configured such that a plurality of medicine cassettes 110 are disposed and stored in the medicine cassette storage regions 510 which are tightly formed in plural rows and plural columns, as shown in the drawings.

In the embodiment shown in the drawings, the medicine cassette storage part 500 is provided on side surface portions of the main body of the automatic medicine packing machine 100 above the cassette mounting part 200. However, the medicine cassette storage part 500 is not limited to the above-described configuration, and the medicine cassette storage part 500 may be provided only on a portion of the side surface portion or may be further provided on a wall surface or the like.

According to an embodiment of the present disclosure, the medicine cassette storage part 500 may be provided to have a configuration in which storage shelves 520 on which a plurality of storage regions 510 are formed in plural rows and plural columns are arranged in plural rows so as to be able to store a larger number of medicine cassettes 110.

Referring to FIGS. 2 to 4, there is exemplarily shown the embodiment in which the medicine cassette storage parts 500 arranged at both sides of the main body of the automatic medicine packing machine 100 are formed in a shelf-like structure of double rows. For example, the medicine cassette storage part 500 may be configured to include a first row of medicine cassette storage part 530 having one or more storage shelves 520 arranged in one direction, and a second row of medicine cassette storage part 540 disposed at the rear side of the first row of medicine cassette storage part 530 and having one or more storage shelves 520 arranged in one direction.

According to one embodiment of the present disclosure, when the medicine cassette storage part 500 is formed in a plural-row structure as described above, at least storage shelves other than the rearmost storage shelves may be configured to be movable along a movement rail 550, and at least storage shelves other than the rearmost storage shelves may be configured to have an empty space 560 formed between the storage shelves.

For example, the medicine cassette storage part 500 may be provided to have a configuration in which a plurality of storage shelves are arranged in one direction, as the medicine cassette storage parts shown in both sides in FIGS. 2 to 4. In this embodiment, the number of storage shelves disposed at the front side is smaller than that of the storage shelves disposed at the rear side by at least one or more to form the empty space 560 between the frontside storage shelves. Through the empty space 560, a transfer robot 620 (to be described later) of the medicine cassette replacement system 600 can easily approach and grip the medicine cassette of the rear-side storage shelf.

According to one embodiment of the present disclosure, the medicine cassette replacement system 600 is provided between the medicine cassette mounting part 200 and the medicine cassette storage part 500 to automatically replace the medicine cassette 110 between the medicine cassette mounting part 200 and the medicine cassette storage part 500.

According to one embodiment of the present disclosure, the medicine cassette replacement system 600 may perform a function of gripping and moving the medicine cassette 110 between the medicine cassette mounting part 200 and the medicine cassette storage part 500.

According to one embodiment of the present disclosure, the medicine cassette replacement system 600 may be configured to be able to approach and grip a plurality of medicine cassettes 110, which are disposed in the medicine cassette mounting part 200 and the medicine cassette storage part 500, using the transfer robot 620.

According to one embodiment of the present disclosure, the transfer robot 620 of the medicine cassette replacement system 600 may be formed as a multi-joint robot so as to access various positions. For example, the transfer robot 620 may be configured to have one or more joints 630 to access various positions and in various directions. Further, the transfer robot 620 may have a gripper 640 provided at the end thereof to grip the medicine cassette 110.

According to one embodiment of the present disclosure, the transfer robot 620 of the medicine cassette replacement system 600 may be configured to be movable within the automatic medicine packing machine 100 via the guide rail 610 so that the transfer robot 620 can access various positions. For example, as shown in FIGS. 2 to 6, the medicine cassette replacement system 600 is configured such that the transfer robot 620 is mounted on a mounting base 650 which is provided on the guide rail 610 disposed on one side of the medicine cassette mounting part 200. Thus, by changing a position of the transfer robot 620 through the guide rail 610, it is possible for the transfer robot 620 to access various positions in the medicine cassette mounting part 200 and the medicine cassette storage part 500.

According to one embodiment of the present disclosure, the medicine cassette replacement system 600 may include a temporary stage 660 configured to temporarily locate the medicine cassette 110 in the vicinity of the transfer robot 620.

As described above, by providing the temporary stage 660 on one side of the transfer robot 620 constituting the medicine cassette replacement system 600 and moving the transfer robot 620 to the vicinity of the medicine cassette 110 to be replaced on the medicine cassette mounting part 200 in a state in which a new medicine cassette 110 is placed on the temporary stage 660, it is possible to perform a medicine cassette replacement operation of replacing the medicine cassette 100 to be replaced disposed on the medicine cassette mounting part 200 with the new medicine cassette 110 on the temporary stage 660. This makes it possible to replace the medicine cassette with a new one using only one transfer robot having a multi-joint, and perform the medicine cassette replacement in a faster and easier manner. Although, in the embodiment shown in the drawings, the medicine cassette mounting parts 200 are provided in two rows, the medicine collecting part 300 and the medicine packing part 400 are provided in two rows below the medicine cassette mounting parts 200, and the transfer robots 620 are provided at both sides of the medicine cassette mounting parts 200 for the purpose of a faster packing operation, the automatic medicine packing machine 100 configured as above according to an embodiment of the present disclosure may perform the medicine cassette replacement operation using the single transfer robot 620.

According to one embodiment of the present disclosure, the medicine cassette 110 may be arranged in a same upward-downward orientation on the medicine cassette mounting part 200, the medicine cassette storage part 500, and the temporary stage 660 of the medicine cassette replacement system 600, and the transfer robot 620 of the medicine cassette replacement system 600 may be configured to transfer the medicine cassette 110 without changing the upward-downward orientation of the medicine cassette 110.

When the medicine cassette 110 gripped by the transfer robot 620 is moved while being obliquely oriented or greatly swing, there is a concern that medicines such as tablets, or the like stored in the medicine cassette 110 may be damaged. However, in the automatic medicine packing machine 100 according to one embodiment of the present disclosure, the medicine cassette 110 gripped by the transfer robot 620 is configured to be moved while maintaining the upward-downward orientation. This prevents the medicine cassette 110 gripped and moved by the transfer robot 620 from drastically shaking, thus suppressing damage of the medicines such as tablets stored in the medicine cassette 110.

To do this, the medicine cassette 110 used in the automatic medicine packing machine 100 according to one embodiment of the present disclosure may be configured to have one or more grip grooves into which the grippers 640 of the transfer robot 620 are inserted and coupled.

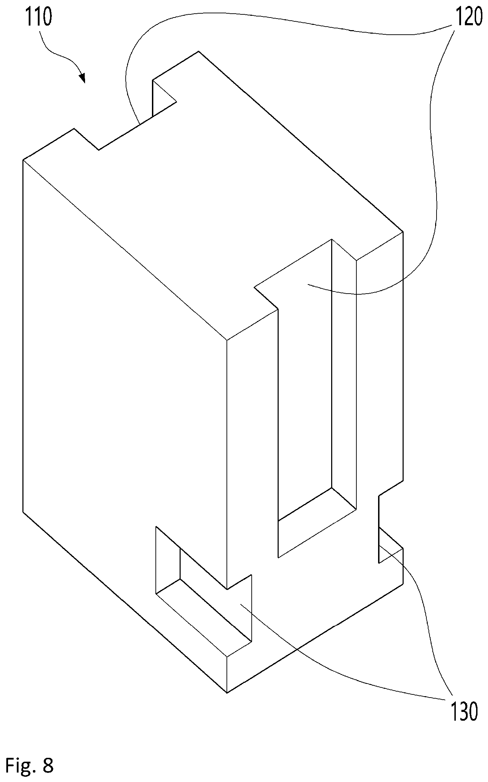

For example, as shown in FIG. 8, the medicine cassette 110, which may be used in the automatic medicine packing machine 100 according to one embodiment of the present disclosure, may be configured to have a first grip groove 120 formed to extend in a first direction (for example, a vertical direction) and a second grip groove 130 formed to extend in a second direction (for example, a lateral direction) different from the first direction.

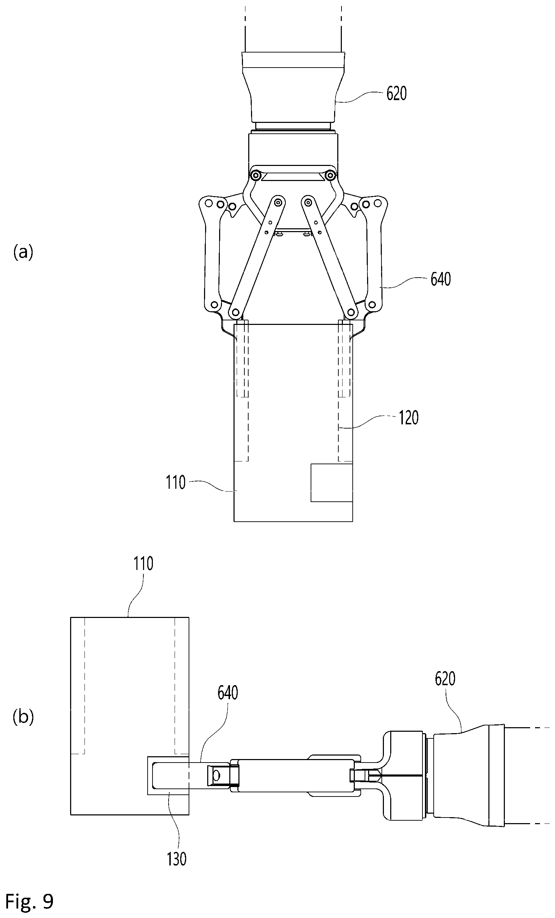

With this configuration, when the transfer robot 620 of the medicine cassette replacement system 600 grips and moves the medicine cassette 110 mounted on the medicine cassette mounting part 200, the grippers 640 of the transfer robot 620 may be inserted into the first grip grooves 120 of the medicine cassette 110 in the vertical direction (i.e., a direction that the first grip grooves 120 is formed) to grip the medicine cassette 110, as shown in FIG. 9A. Further, when the transfer robot 620 grips and moves the medicine cassette 110 disposed in the medicine cassette storage part 500, the grippers 640 of the transfer robot 620 may be inserted into the second grip grooves 120 of the medicine cassette 110 in the lateral direction (i.e., a direction in which each of the second grip grooves 120 is formed) to grip the medicine cassette 110, as shown in FIG. 9B.

More specifically, the medicine cassette replacement system 600 of the automatic medicine packing machine 100 according to one embodiment of the present disclosure may be configured such that, in the case of moving the medicine cassette 110 between the medicine cassette mounting part 200 and the temporary stage 660, the grippers 640 of the transfer robot 620 are inserted into the first grip grooves 120 of the medicine cassette 110 to move the medicine cassette 110 while gripping the medicine cassette 110 from the top, and in the case of moving the medicine cassette 110 between the medicine cassette storage part 500 and the temporary stage 660, the grippers 640 of the transfer robot 620 are inserted into the second grip grooves 130 of the medicine cassette 110 to move the medicine cassette 110 while gripping the medicine cassette 110 from the lateral side.

Although not shown in the drawings for the sake of convenience in illustration, the medicine cassette 110 may have a lid provided on one side thereof. When the lid is opened, medicines can be supplied to the medicine cassette 110 through the opened lid portion.

According to one embodiment of the present disclosure, an interface unit configured to recognize a type, quantity and the like of medicines stored in the medicine cassette 110, information on a position at which the medicine cassette is mounted, and the like, may be provided in the medicine cassette 110, the medicine cassette mounting part 200, the medicine cassette storage part 500, the temporary stage 660 of the medicine cassette replacement system 600, and the like.

For example, the medicine cassette 110 may include an identification information storage part that stores information on a type, quantity and the like of medicines stored in the medicine cassette 110. The medicine cassette mounting part 200, the medicine cassette storage part 500, the temporary stage 660, and the like may include an identification information storage part that stores position information on a position. The identification information may be transmitted and received through the interface unit so that the information on the type, quantity and the like of medicines stored in the medicine cassette 110, and the position information of the medicine cassette mounting part 200, the medicine cassette storage part 500, and the temporary stage 660 on which the medicine cassette 110 is mounted may be transmitted and received with respect to each another.

With such a configuration, the automatic medicine packing machine 100 according to one embodiment of the present disclosure is capable of identifying the position where the medicine cassette 110 accommodating particular medicines is disposed on the medicine cassette mounting part 200, the medicine cassette storage part 500 or the temporary stage 660. Thus, the automatic medicine packing machine 100 can be automatically operated while automatically replacing the medicine cassette 110 according to an operational instruction provided from a controller (not shown).

According to one embodiment of the present disclosure, the interface unit provided in the medicine cassette 110, the medicine cassette mounting part 200, the medicine cassette storage part 500, the temporary stage 660, and the like may be implemented through a typical communication method such as Near Field Communication (NFC), Radio Frequency Identification (RFID), an electrical connector, or the like.

Further, according to one embodiment of the present disclosure, the automatic medicine packing machine 100 may be configured such that a medicine cassette which are frequently used and needs to be frequently replaced, or a medicine cassette to be placed soon among the medicine cassettes mounted on the medicine cassette mounting part 200 may be controlled to be placed in advance on the temporary stage 660 of the medicine cassette replacement system 600, thus performing replacement of the medicine cassette in a faster manner and further enhancing the efficiency of the automatic medicine packing machine 100.

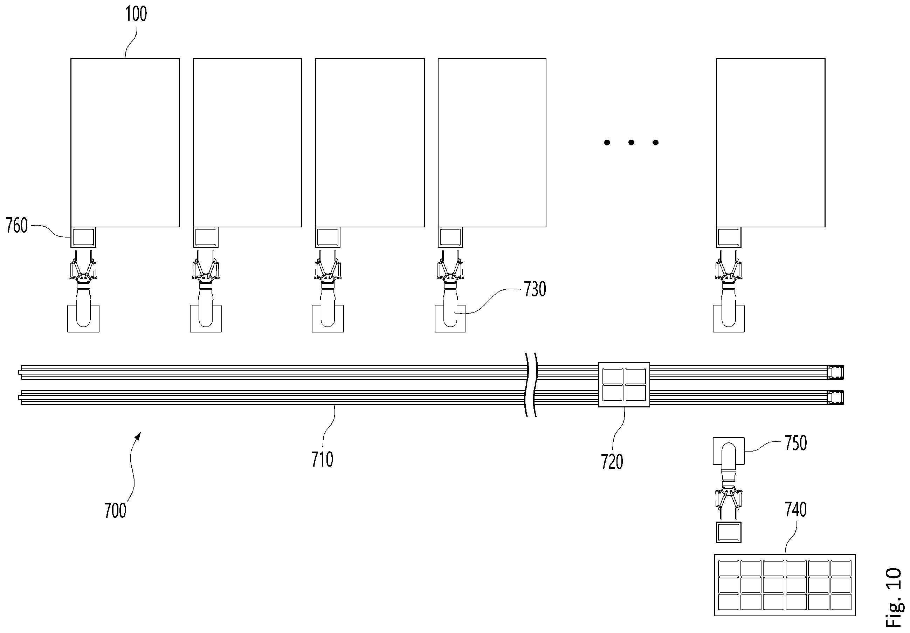

According to one embodiment of the present disclosure, a plurality of automatic medicine packing machines 100 may be provided in a factory-type configuration to perform the automatic medicine packing operation more efficiently, as shown in FIG. 10.

In such a case, the automatic medicine packing machines 100 according to one embodiment of the present disclosure may be configured to be operated while automatically replacing an empty medicine cassette 110 in the medicine cassette storage part 500 with a medicine-filled cassette 110 by a medicine cassette refill system 700.

According to one embodiment of the present disclosure, the medicine cassette refill system 700 may be configured to include a rail system 710 provided at one side of the automatic medicine packing machine 100, a refill cassette stage 720 mounted on the rail system 710 and configured to be movable along the rail system 710, a refill cassette transfer device (a first refill cassette transfer device 730) located between the rail system 710 and the automatic medicine packing machine 100 to transfer the medicine cassette 110 between the automatic medicine packing machine 100 and the refill cassette stage 720, a refill station 740 provided at one side of the rail system 710 to refill medicines to an empty cassette, another refill cassette transfer device (a second refill cassette transfer device 750) configured to transfer the medicine cassette 110 between the refill cassette stage 720 and the refill station 740, and the like.

The medicine cassette refill system 700 configured as above may be operated in the following manner.

First, an empty medicine cassette 110 stored in the medicine cassette storage part 500 of the automatic medicine packing machine 100 may be delivered to the refill cassette stage 720 on the rail system 710 through the first refill cassette transfer device 730. To this end, the automatic medicine packing machine 100 may include a buffer station 760 provided at one side thereof to move the empty medicine cassette 110 to be refilled onto the buffer station 760. The first refill cassette transfer device 730 may be configured to grip and deliver the medicine cassette 110 placed on the buffer station 760 to the refill cassette stage 720. At this time, the operation of moving the empty medicine cassette 110 stored in the medicine cassette storage part 500 to the buffer station 760 may be performed by the transfer robot 620 provided in the automatic medicine packing machine 100, the refill cassette transfer device (for example, the first refill cassette transfer device 730) provided in the medicine cassette refill system 600, or another additional transfer device, and the like.

As described above, when the medicine cassette 110 to be refilled is delivered to the refill cassette stage 720, the refill cassette stage 720 is moved to the refill station 740 along the rail system 710. Subsequently, when the refill cassette stage 720 is moved to the refill station 740, the second refill cassette transfer device 750 grips the empty medicine cassette 110 placed on the refill cassette stage 720 and delivers the same to the refill station 740. The empty medicine cassette 110 delivered to the refill station 740 may be filled with medicines by a pharmacist or manager working at the refill station 740.

When the medicine refill of the empty medicine cassette 110 is completed in the above manner and the medicine-filled cassette 110 is placed on the refill station 740, the medicine-filled cassette 110 may be supplied to each automatic medicine packing machine 100 in an order opposite the above order and may be stored in the medicine cassette storage part 500 of the automatic medicine packing machine 100.

For implementation of such an automation system, the refill cassette state 720, the refill station 740, the buffer station 760 and the like may include a mounting holder configured to hold the medicine cassette. The mounting holder may include the identification information storage part for identifying the position information and/or the interface unit for exchanging the identification information with the medicine cassette therethrough, like the medicine cassette mounting part 200, the medicine cassette storage part 500, the temporary stage 660, and the like described above.

With such a configuration, since the empty medicine cassette 110 located in the medicine cassette storage part 500 of the aforementioned automatic medicine packing machine 100 can be automatically replaced with the medicine-filled cassette 110, it is possible to more quickly and stably perform the operation of collecting and packing the medicines using the automatic medicine packing machine 100.

Although the present disclosure has been described above by way of particular matters such as specific components and the like, specific embodiments and the accompanying drawings, such descriptions are merely provided for the sake of easier understanding of the present disclosure. However, the present disclosure is not limited to the above embodiments, but various modifications and variations may be made by those skilled in the art.

A While the present disclosure has been described with reference to specific items such as particular components, exemplary embodiments, and drawings, these are merely provided to help understanding the present disclosure, and the present disclosure is not limited to these embodiments, and those skilled in the art to which the present disclosure pertains can variously alter and modify from the description of the present disclosure.

### [Description of Reference Numerals]

100: automatic medicine packing machine
110: medicine cassette
120: first grip groove
130: second grip groove
200: medicine cassette mounting part
210: mounting holder
220: through-hole
230: first row of medicine cassette mounting part
240: second row of medicine cassette mounting part
300: medicine collecting part
310: medicine collecting tray
320: conveyor belt
330: reception pocket
340: medicine collecting hopper
350: powdery-medicine supply part
360: powdery-medicine transfer part
400: medicine packing part
500: medicine cassette storage part
510: storage region
520: storage shelf
530: first row of medicine cassette storage part
540: second row of medicine cassette storage part
550: movement rail
560: space (formed between adjacent storage shelves)
600: medicine cassette replacement system
610: guide rail
620: transfer robot
630: joint (of the transfer robot)
640: gripper (of the transfer robot)
650: mounting base
660: temporary stage
700: medicine cassette refill system
710: rail system
720: refill cassette stage
730: first refill cassette transfer device
740: refill station
750: second refill cassette transfer device
760: buffer station

## Claims

1. An automatic medicine packing machine (100) for automatically packing medicines on a dose basis according to prescription information, comprising:
a medicine cassette mounting part (200) in which a plurality of medicine cassettes for supplying the medicines are mounted;
a medicine collecting part (300) configured to collect the medicines supplied according to the prescription information;
a medicine packing part (400) configured to pack the medicines collected by the medicine collecting part (300) on the dose basis;
a medicine cassette storage part (500) in which a plurality of medicine cassettes are placed and stored; and
a medicine cassette replacement system (600) configured to grip the medicine cassette (110) and replace the medicine cassette (110) between the medicine cassette mounting part (200) and the medicine cassette storage part (500),
wherein the medicine cassette replacement system (600) includes a transfer robot (620) equipped with a gripper (640) for gripping the medicine cassette (110) at an end portion of the transfer robot, and a temporary stage (660) on which the medicine cassette (110) is placed,
wherein the medicine cassette replacement system (600) is configured such that the transfer robot (620) is movable relative to the medicine cassette mounting part (200) and the medicine cassette storage part (500) along a guide rail (610),
**characterized in that** the medicine collecting part (300) is disposed below the medicine cassette mounting part (200) and includes a medicine collecting tray (310) that receives medicines discharged from the medicine cassette (110),
wherein the medicine collecting tray (310) includes a plurality of medicine collecting pockets (330),
wherein each of the medicine collecting pockets (330) moves relative to the medicine cassette mounting part (200) below the medicine cassette mounting part (200) through a conveyor belt (320) rotated by an electric motor and receives the medicines from the medicine cassette (110) mounted on the medicine cassette mounting part (200), and
wherein each of the medicine collecting pockets (330) receives the medicines supplied according to the prescription information from the medicine cassette (110) mounted on the medicine cassette mounting part (200) while moving according to a rotation of the conveyor belt (320), and then forwards medicines of one dose to the medicine collecting hopper (340) disposed below one end portion of the medicine collecting tray (310) while moving according to the rotation of the conveyor belt (320),
wherein the temporary stage (660) is configured to temporarily place the medicine cassette (110) when the medicine cassette (110) mounted on the medicine cassette mounting part (200) or the medicine cassette storage part (500) needs to be replaced with another medicine cassette, thereby allowing the another medicine cassette to be mounted on the medicine cassette mounting part (200) or the medicine cassette storage part (500).

2. The automatic medicine packing machine (100) of Claim 1, wherein the transfer robot (620) is formed as a multi-joint robot.

3. The automatic medicine packing machine (100) of Claim 1, wherein the temporary stage (660), with the another medicine cassette placed thereon, is moved to the vicinity of the medicine cassette (110) that needs to be replaced by the movement of the transfer robot (620).

4. The automatic medicine packing machine (100) of Claim 1, wherein the medicine cassette (110) is arranged in a same upward-downward orientation on the medicine cassette mounting part (200), the medicine cassette storage part (500) and the temporary stage (660).

5. The automatic medicine packing machine (100) of Claim 4, wherein the transfer robot (220) is configured to transfer the medicine cassette (110) while keeping the upward-downward orientation of the medicine cassette (110) constant.

6. The automatic medicine packing machine (100) of Claim 1,wherein the medicine cassette (110) has first grip grooves (120) formed to extend along a vertical direction of the medicine cassette (110), and the gripper (640) of the transfer robot (620) is inserted into the first grip grooves (120) when the transfer robot (620) grips and moves the medicine cassette (110) mounted on the medicine cassette mounting part (200).

7. The automatic medicine packing machine (100) of Claim 6, wherein the medicine cassette (110) has second grip grooves (130) formed to extend along a lateral direction of the medicine cassette (110), and the gripper (640) of the transfer robot (620) is inserted into the second grip grooves (130) when the transfer robot (620) grips and moves the medicine cassette (110) disposed in the medicine cassette storage part (500).

8. The automatic medicine packing machine (100) of Claim 1, wherein:
the medicine cassette (110) is provided with an identification information storage part that stores information on at least one of a type and quantity of the medicines stored in the medicine cassette (110),
portions at which the temporary stage (660) are provided with an identification information storage part that stores position information of the medicine cassette (110), and
the temporary stage (660) includes an interface unit configured to transmit and receive the identification information stored in the identification information storage part.

9. The automatic medicine packing machine (100) of Claim 1, wherein:
the medicine cassette storage part (500) is formed as storage shelves (520) of a multi-layered structure in which a plurality of storage regions (510) are formed, and
the medicine cassettes (110) are able to be arranged in the plurality of storage regions (510) in plural rows and plural columns.

10. The automatic medicine packing machine (100) of Claim 9, wherein:
all or a portion of the medicine cassette storage part (500) is formed to have a configuration in which a plurality of storage shelves (520) are arranged in the plural rows, and
the plurality of storage shelves (520) are arranged in one direction in each of the plural rows.

11. The automatic medicine packing machine (100) of Claim 10, wherein:
at least storage shelves (520) other than rearmost storage shelve (520) among the plurality of storage shelves (520) arranged in the plural rows are configured to move along a movement rail (550), and
an empty space (560) is formed between adjacent storage shelves among the storage shelves (520) other than the rearmost storage shelves (520).

12. The automatic medicine packing machine (100) of Claim 1, wherein the medicine collecting part (300) and the medicine packing part (400) include a plurality of medicine collecting parts (300) and a plurality of medicine packing parts (400), respectively.

13. A factory-type automatic medicine packing system including a plurality of the automatic medicine packing machine (100) of any one of Claims 1 to 12, comprising:
a rail system (710) provided at one side of the automatic medicine packing machine (100);
a refill cassette stage (720) mounted on the rail system (710) and configured to be able to move along the rail system (710);
a first refill cassette transfer device (730) configured to transfer a medicine cassette between the automatic medicine packing machine (100) and the refill cassette stage (720);
a refill station (740) configured to fill medicines in the medicine cassette; and
a second refill cassette transfer device (740) configured to transfer the medicine cassette between the refill cassette stage (720) and the refill station (740).

## Patentansprüche

1. Automatische Medikamentenverpackungsmaschine (100) zum automatischen Verpacken von Medikamenten auf Dosisbasis gemäß Verschreibungsinformationen, umfassend:
einen Medikamentenkassetten-Montageteil (200), in dem eine Vielzahl von Medikamentenkassetten zum Zuführen der Medikamente montiert sind;
einen Medikamentensammelteil (300), der so konfiguriert ist, dass er die gemäß den Verschreibungsinformationen zugeführten Medikamente sammelt;
einen Medikamentenverpackungsteil (400), der so konfiguriert ist, dass er die vom Medikamentensammelteil (300) gesammelten Medikamente auf Dosisbasis verpackt;
einen Medikamentenkassetten-Aufbewahrungsteil (500), in dem eine Vielzahl von Medikamentenkassetten platziert und aufbewahrt werden; und
ein Medikamentenkassetten-Austauschsystem (600), das so konfiguriert ist, dass es die Medikamentenkassette (110) greift und die Medikamentenkassette (110) zwischen dem Medikamentenkassetten-Montageteil (200) und dem Medikamentenkassetten-Aufbewahrungsteil (500) austauscht,
wobei das Medikamentenkassetten-Austauschsystem (600) einen Transferroboter (620) beinhaltet, der mit einem Greifer (640) zum Greifen der Medikamentenkassette (110) an einem Endbereich des Transferroboters ausgestattet ist, und eine temporäre Plattform (660), auf der die Medikamentenkassette (110) platziert wird,
wobei das Medikamentenkassetten-Austauschsystem (600) so konfiguriert ist, dass der Transferroboter (620) relativ zum Medikamentenkassetten-Montageteil (200) und zum Medikamentenkassetten-Aufbewahrungsteil (500) entlang einer Führungsschiene (610) beweglich ist,
**dadurch gekennzeichnet, dass** sich der Medikamentensammelteil (300) unterhalb des Medikamentenkassetten-Montageteils (200) befindet und eine Medikamentensammelschale (310) beinhaltet, die aus der Medikamentenkassette (110) ausgegebene Medikamente aufnimmt,
wobei die Medikamentensammelschale (310) eine Vielzahl von Medikamentensammeltaschen (330) beinhaltet,
wobei sich jede der Medikamentensammeltaschen (330) relativ zum Medikamentenkassetten-Montageteil (200) unterhalb des Medikamentenkassetten-Montageteils (200) über ein durch einen Elektromotor angetriebenes Förderband (320) bewegt und die Medikamente aus der auf dem Medikamentenkassetten-Montageteil (200) befestigten Medikamentenkassette (110) aufnimmt, und
wobei jede der Medikamentensammeltaschen (330) die gemäß den Verschreibungsinformationen gelieferten Medikamente aus der auf dem Medikamentenkassetten-Montageteil (200) montierten Medikamentenkassette (110) aufnimmt, während sie sich gemäß der Drehung des Förderbandes (320) bewegt, und dann Medikamente einer Dosis an den Medikamentensammelbehälter (340) weiterleitet, der sich unter einem Endbereich der Medikamentensammelschale (310) befindet, während er sich gemäß der Drehung des Förderbandes (320) bewegt,
wobei die Zwischenstufe (660) so konfiguriert ist, dass sie die Medikamentenkassette (110) vorübergehend platziert, wenn die an dem Medikamentenkassetten-Montageteil (200) oder dem Medikamentenkassetten-Aufbewahrungsteil (500) montierte Medikamentenkassette (110) durch eine andere Medikamentenkassette ersetzt werden muss, wodurch es ermöglicht wird, die andere Medikamentenkassette auf dem Medikamentenkassetten-Montageteil (200) oder dem Medikamentenkassetten-Aufbewahrungsteil (500) zu montieren.

2. Automatische Medikamentenverpackungsmaschine (100) gemäß Anspruch 1, wobei der Transferroboter (620) als Mehrgelenkroboter ausgebildet ist.

3. Automatische Medikamentenverpackungsmaschine (100) gemäß Anspruch 1, wobei die Zwischenstufe (660) mit der darauf platzierten anderen Medikamentenkassette durch die Bewegung des Transferroboters (620) in die Nähe der Medikamentenkassette (110) bewegt wird, die ausgetauscht werden muss.

4. Automatische Medikamentenverpackungsmaschine (100) gemäß Anspruch 1, wobei die Medikamentenkassette (110) in derselben Aufwärts-Abwärts-Ausrichtung auf dem Medikamentenkassetten-Montageteil (200), dem Medikamentenkassetten-Aufbewahrungsteil (500) und der Zwischenstufe (660) angeordnet ist.

5. Automatische Medikamentenverpackungsmaschine (100) gemäß Anspruch 4, wobei der Transferroboter (220) so konfiguriert ist, dass er die Medikamentenkassette (110) transportiert, während er die Aufwärts-Abwärts-Ausrichtung der Medikamentenkassette (110) konstant hält.

6. Automatische Medikamentenverpackungsmaschine (100) gemäß Anspruch 1, wobei die Medikamentenkassette (110) erste Griffnuten (120) aufweist, die so ausgebildet sind, dass sie sich entlang einer vertikalen Richtung der Medikamentenkassette (110) erstrecken, und der Greifer (640) des Transferroboters (620) in die ersten Griffnuten (120) eingeführt wird, wenn der Transferroboter (620) die auf dem Medikamentenkassetten-Montageteil (200) montierte Medikamentenkassette (110) greift und bewegt.

7. Automatische Medikamentenverpackungsmaschine (100) gemäß Anspruch 6, wobei die Medikamentenkassette (110) zweite Griffnuten (130) aufweist, die so ausgebildet sind, dass sie sich entlang einer seitlichen Richtung der Medikamentenkassette (110) erstrecken, und der Greifer (640) des Transferroboters (620) in die zweiten Griffnuten (130) eingeführt wird, wenn der Transferroboter (620) die sich im Medikamentenkassetten-Aufbewahrungsteil (500) befindliche Medikamentenkassette (110) greift und bewegt.

8. Automatische Medikamentenverpackungsmaschine (100) gemäß Anspruch 1, wobei:
die Medikamentenkassette (110) mit einem Identifikationsinformationsspeicherteil versehen ist, der Informationen über mindestens einen Typ und eine Menge der in der Medikamentenkassette (110) aufbewahrten Medikamente speichert,
Bereiche, an denen die Zwischenstufe (660) ist, mit einem Identifikationsinformationsspeicherteil versehen sind, das Positionsinformationen der Medikamentenkassette (110) speichert, und
die Zwischenstufe (660) eine Schnittstelleneinheit beinhaltet, die so konfiguriert ist, dass sie die im Identifikationsinformationsspeicherteil gespeicherten Identifikationsinformationen sendet und empfängt.

9. Automatische Medikamentenverpackungsmaschine (100) gemäß Anspruch 1, wobei:
der Medikamentenkassetten-Aufbewahrungsteil (500) als Aufbewahrungsregale (520) mit einer mehrschichtigen Struktur ausgebildet ist, in der eine Vielzahl von Aufbewahrungsbereichen (510) ausgebildet sind, und
die Medikamentenkassetten (110) in mehreren Reihen und mehreren Spalten in der Vielzahl von Aufbewahrungsbereichen (510) angeordnet werden können.

10. Automatische Medikamentenverpackungsmaschine (100) gemäß Anspruch 9, wobei:
der gesamte oder ein Bereich des Medikamentenkassetten-Aufbewahrungsteils (500) so ausgebildet ist, dass er eine Konfiguration aufweist, in der eine Vielzahl von Aufbewahrungsregalen (520) in den mehreren Reihen angeordnet sind, und
die Vielzahl von Aufbewahrungsregalen (520) in jeder der mehreren Reihen in einer Richtung angeordnet sind.

11. Automatische Medikamentenverpackungsmaschine (100) gemäß Anspruch 10, wobei:
zumindest Aufbewahrungsregale (520) mit Ausnahme des hintersten Aufbewahrungsregals (520) unter der Vielzahl von Aufbewahrungsregalen (520), die in den mehreren Reihen angeordnet sind, so konfiguriert sind, dass sie sich entlang einer Bewegungsschiene (550) bewegen, und
zwischen benachbarten Aufbewahrungsregalen unter den Aufbewahrungsregalen (520) mit Ausnahme der hintersten Aufbewahrungsregale (520) ein leerer Raum (560) ausgebildet wird.

12. Automatische Medikamentenverpackungsmaschine (100) gemäß Anspruch 1, wobei der Medikamentensammelteil (300) und der Medikamentenverpackungsteil (400) jeweils eine Vielzahl von Medikamentensammelteilen (300) und eine Vielzahl von Medikamentenverpackungsteilen (400) beinhalten.

13. Automatisches Medikamentenverpackungssystem vom Fabriktyp, das eine Vielzahl von automatischen Medikamentenverpackungsmaschinen (100) gemäß einem der Ansprüche 1 bis 12 beinhaltet, umfassend:
ein Schienensystem (710), das an einer Seite der automatischen Medikamentenverpackungsmaschine (100) vorgesehen ist;
eine Nachfüllkassettenstufe (720), die auf dem Schienensystem (710) montiert und so konfiguriert ist, dass sie sich entlang des Schienensystems (710) bewegen kann;
eine erste Nachfüllkassetten-Transfervorrichtung (730), die so konfiguriert ist, dass sie eine Medikamentenkassette zwischen der automatischen Medikamentenverpackungsmaschine (100) und der Nachfüllkassettenstufe (720) transportiert;
eine Nachfüllstation (740), die so konfiguriert ist, dass sie Medikamente in die Medikamentenkassette füllt; und
eine zweite Nachfüllkassetten-Transfervorrichtung (740), die so konfiguriert ist, dass sie die Medikamentenkassette zwischen der Nachfüllkassettenstufe (720) und der Nachfüllstation (740) transportiert.

## Revendications

1. Machine d'emballage automatique de médicaments (100) destinée à emballer automatiquement des médicaments à une dose prescrite conformément aux informations de prescription, comprenant :
une partie de montage de cassettes de médicaments (200) dans laquelle sont montées une pluralité de cassettes de médicaments destinées à fournir les médicaments ;
une partie de collecte de médicaments (300) configurée pour collecter les médicaments fournis conformément aux informations de prescription ;
une partie d'emballage de médicaments (400) configurée pour emballer les médicaments collectés par la partie de collecte de médicaments (300) sur la base de la dose ;
une partie de stockage de cassettes de médicaments (500) dans laquelle une pluralité de cassettes de médicaments sont placées et stockées ; et
un système de remplacement de cassette de médicaments (600) configuré pour saisir la cassette de médicaments (110) et remplacer la cassette de médicaments (110) entre la partie de montage de cassette de médicaments (200) et la partie de stockage de cassette de médicaments (500),
dans lequel le système de remplacement de cassette de médicaments (600) comprend un robot de transfert (620) équipé d'une pince (640) pour saisir la cassette de médicaments (110) à une extrémité du robot de transfert, et une plate-forme temporaire (660) sur laquelle la cassette de médicaments (110) est placée,
dans lequel le système de remplacement de cassette de médicaments (600) est configuré de telle sorte que le robot de transfert (620) est mobile par rapport à la partie de montage de cassette de médicaments (200) et à la partie de stockage de cassette de médicaments (500) le long d'un rail de guidage (610),
**caractérisé en ce que** la partie de collecte de médicaments (300) est disposée sous la partie de montage de cassette de médicaments (200) et comprend un plateau de collecte de médicaments (310) qui reçoit des médicaments déchargés de la cassette de médicaments (110),
dans lequel le plateau de collecte de médicaments (310) comprend une pluralité de poches de collecte de médicaments (330),
dans lequel chacune des poches de collecte de médicaments (330) se déplace par rapport à la partie de montage de cassette de médicaments (200) sous la partie de montage de cassette de médicaments (200) grâce à une bande transporteuse (320) entraînée en rotation par un moteur électrique et reçoit les médicaments provenant de la cassette de médicaments (110) montée sur la partie de montage de cassette de médicaments (200), et
dans lequel chacune des poches de collecte de médicaments (330) reçoit les médicaments fournis conformément aux informations de prescription provenant de la cassette de médicaments (110) montée sur la partie de montage de cassette de médicaments (200) tout en se déplaçant conformément à une rotation de la bande transporteuse (320), puis achemine des médicaments d'une dose vers la trémie de collecte de médicaments (340) disposée sous une partie d'extrémité du plateau de collecte de médicaments (310) tout en se déplaçant selon la rotation de la bande transporteuse (320),
dans lequel la plate-forme temporaire (660) est configurée pour placer temporairement la cassette de médicaments (110) lorsque la cassette de médicaments (110) montée sur la partie de montage de cassette de médicaments (200) ou la partie de stockage de cassette de médicaments (500) doit être remplacée par une autre cassette de médicaments, permettant ainsi à l'autre cassette de médicaments d'être montée sur la partie de montage de cassette de médicaments (200) ou la partie de stockage de cassette de médicaments (500).

2. La machine d'emballage automatique de médicaments (100) selon la revendication 1, dans laquelle le robot de transfert (620) est conçu comme un robot à articulations multiples.

3. La machine d'emballage automatique de médicaments (100) selon la revendication 1, dans laquelle la plate-forme temporaire (660), avec une autre cassette de médicaments placée dessus, est déplacée à proximité de la cassette de médicaments (110) qui doit être remplacée par le mouvement du robot de transfert (620).

4. La machine d'emballage automatique de médicaments (100) selon la revendication 1, dans laquelle la cassette de médicaments (110) est disposée dans un même orientation vers le haut et vers le bas sur la partie de montage de cassette de médicaments (200), la partie de stockage de cassette de médicaments (500) et la plate-forme temporaire (660).

5. La machine d'emballage automatique de médicaments (100) selon la revendication 4, dans laquelle le robot de transfert (220) est configuré pour transférer la cassette de médicaments (110) tout en maintenant constante l'orientation vers le haut et vers le bas de la cassette de médicaments (110).

6. La machine d'emballage automatique de médicaments (100) selon la revendication 1, dans laquelle la cassette de médicaments (110) comporte des premières rainures de préhension (120) formées de manière à s'étendre dans une direction verticale de la cassette de médicaments (110), et la pince (640) du robot de transfert (620) est insérée dans les premières rainures de préhension (120) lorsque le robot de transfert (620) saisit et déplace la cassette de médicaments (110) montée sur la partie de montage de cassette de médicaments (200).

7. La machine d'emballage automatique de médicaments (100) selon la revendication 6, dans laquelle la cassette de médicaments (110) comporte des secondes rainures de préhension (130) formées de manière à s'étendre dans une direction latérale de la cassette de médicaments (110), et la pince (640) du robot de transfert (620) est insérée dans les secondes rainures de préhension (130) lorsque le robot de transfert (620) saisit et déplace la cassette de médicaments (110) disposée dans la partie de stockage de cassettes de médicaments (500).

8. La machine d'emballage automatique de médicaments (100) selon la revendication 1, dans laquelle :
la cassette de médicaments (110) est pourvue d'une partie de stockage d'informations d'identification qui stocke des informations sur au moins l'un parmi un type et quantité des médicaments stockés dans la cassette de médicaments (110),
des parties où se trouvent les plate-formes temporaires (660) sont pourvues d'une partie de stockage d'informations d'identification qui stocke des informations de position de la cassette de médicaments (110), et
la plate-forme temporaire (660) comprend une unité d'interface configurée pour transmettre et recevoir les informations d'identification stockées dans la partie de stockage d'informations d'identification.

9. La machine d'emballage automatique de médicaments (100) selon la revendication 1, dans laquelle :
la partie de stockage des cassettes de médicaments (500) est formée comme des étagères de stockage (520) d'une structure multicouche dans laquelle une pluralité de zones de stockage (510) sont formées, et
les cassettes de médicaments (110) peuvent être disposées dans la pluralité de zones de stockage (510) en plusieurs rangées et plusieurs colonnes.

10. La machine d'emballage automatique de médicaments (100) selon la revendication 9, dans laquelle :
tout ou partie de la partie de stockage des cassettes de médicaments (500) est formée de manière à avoir une configuration dans laquelle une pluralité d'étagères de stockage (520) sont disposées en plusieurs rangées, et
la pluralité d'étagères de stockage (520) sont disposées dans une direction dans chacune des plusieurs rangées.

11. La machine d'emballage automatique de médicaments (100) selon la revendication 10, dans laquelle :
au moins des étagères de stockage (520) autres que l'étagère de stockage la plus en arrière (520) parmi la pluralité d'étagères de stockage (520) disposées en plusieurs rangées sont configurées pour se déplacer le long d'un rail de déplacement (550), et
un espace vide (560) est formé entre des étagères de stockage adjacentes parmi les étagères de stockage (520) autres que les étagères de stockage les plus à l'arrière (520).

12. La machine d'emballage automatique de médicaments (100) selon la revendication 1, dans laquelle la partie de collecte de médicaments (300) et la partie d'emballage de médicaments (400) comprennent respectivement une pluralité de parties de collecte de médicaments (300) et une pluralité de parties d'emballage de médicaments (400).

13. Système d'emballage automatique de médicaments de type industriel comprenant une pluralité de machines d'emballage automatique de médicaments (100) selon l'une quelconque des revendications 1 à 12, comprenant :
un système de rails (710) prévu sur un côté de la machine d'emballage automatique de médicaments (100) ;
un plateau de cassette de recharge (720) monté sur le système de rails (710) et configuré pour pouvoir se déplacer le long du système de rails (710) ;
un premier dispositif de transfert de cassette de recharge (730) configuré pour transférer une cassette de médicaments entre la machine d'emballage automatique de médicaments (100) et le plateau de cassette de recharge (720) ;
une station de recharge (740) configurée pour remplir des médicaments dans la cassette de médicaments ; et
un deuxième dispositif de transfert de cassette de recharge (740) configuré pour transférer la cassette de médicament entre le plateau de cassette de recharge (720) et la station de recharge (740).
